# EUROPÄISCHE PATENTSCHRIFT

(11) **EP 1 158 590 B1**
(45) Veröffentlichungstag und Bekanntmachung des Hinweises auf die Patenterteilung: **29.07.2009**
(21) Anmeldenummer: 01110504.6
(22) Anmeldetag: 27.04.2001
(51) Int. Cl.: H01M 8/04, B60L 11/18

(54) **Brennstoffzellensystem**
Fuel cell system
Système de pile à combustible

(30) Priorität: 20.05.2000 DE 10025035
(43) Veröffentlichungstag der Anmeldung: 28.11.2001
(73) Patentinhaber: NuCellSys GmbH, 73230 Kirchheim/Teck-Nabern (DE)
(72) Erfinder: Sohmer, Peter, 72230 Kirchheim/Teck (DE)
(74) Vertreter: Moore, David Simon

(56) Entgegenhaltungen:
- PATENT ABSTRACTS OF JAPAN Bd. 1995, Nr. 08, 29. September 1995 (1995-09-29) -& JP 07 135010 A (TOSHIBA CORP.), 23. Mai 1995 (1995-05-23)
- PATENT ABSTRACTS OF JAPAN Bd. 18, Nr. 504, 21. September 1994 (1994-09-21) -& JP 06 176778 A (MITSUBISHI ELECTRIC CORP.), 24. Juni 1994 (1994-06-24)
- PATENT ABSTRACTS OF JAPAN -& JP 02 259226 A (TSUNODA YOSHIAKI), 22. Oktober 1990 (1990-10-22)
- PATENT ABSTRACTS OF JAPAN Bd. 1996, Nr. 03, 29. März 1996 (1996-03-29) & JP 07 293371 A (TOYODA GOSEI CO), 7. November 1995 (1995-11-07)

## Beschreibung

Die Erfindung betrifft ein Brennstoffzellensystem gemäß dem Oberbegriff des unabhängigen Anspruchs 1.

Bei Brennstoffzellensystemen werden Geräuschemissionen in verschiedenen Systembereichen, besonders in Rohrleitungen von Brennstoffzellensystemen, die mit Luftverdichtern wie Rootsgebläsen oder Wankelverdichtern arbeiten, beobachtet. Besonders bei der Verwendung von Brennstoffzellensystemen in Fahrzeugen oder in Anlagen, bei denen eine Geräuschemission störend ist, sind solche Emissionen unerwünscht.

Es ist bekannt, die Geräuschemissionen in Fahrzeugen mit Schalldämpfern zu vermindern. Häufig werden z.B. AnsaugSchalldämpfer oder Endschalldämpfer eingesetzt.

Die Patent Abstracts of Japan zur JP 07 293371 A offenbaren einen Lufteinlassschlauch mit einem Breitbandschalldämpfer aus zwei Schaumschichten, die auf der Innenfläche des Lufteinlassschlauchs übereinander gelegt sind und unterschiedliche Schalldämmfrequenzbereiche haben.

Die Patent Abstracts of Japan zur JP 07 135010 A offenbaren ein Brennstoffzellenkraftwerk, das sich in einem Gebäude befindet, in das über ein Gebläse Außenluft geleitet wird und aus dem über ein weiteres Gebläse Abluft abgeleitet wird. Stromab der Gebläse ist jeweils ein Schalldämpfer im Luftweg angeordnet.

Die Patent Abstracts of Japan zur JP 06 176778 A, die wohl den nächstkommenden Stand der Technik bilden, offenbaren ein Brennstoffzellensystem mit einer Vorrichtung zur Schalldämmung und Gas/Flüssigkeitstrennung in seinen Endstufen.

Der Erfindung liegt die Aufgabe zugrunde, ein Brennstoffzellensystem mit platzsparenden verbesserten schalldämpfenden Mitteln anzugeben.

Diese Aufgabe wird durch ein Brennstoffzellensystem mit den Merkmalen des Anspruchs 1 gelöst.

Günstig ist es, an den Eingängen und Ausgängen der Schallquelle schalldämmende Mittel vorzusehen.

Besonders bevorzugt sind dabei die schalldämmenden Mittel als Breitbandschalldämpfer ausgebildet.

Der besondere Vorteil ist darin zu sehen, daß der Schall an den Stellen gedämpft wird, an denen er entsteht. Dadurch können kleinere Komponenten zur Schalldämmung eingesetzt werden, auf voluminöse Endschalldämpfer kann verzichtet werden. Dies ist besonders günstig bei einer Verwendung des erfindungsgemäßen Brennstoffzellensystems in Fahrzeugen, bei denen große Beschränkungen hinsichtlich des zur Verfügung stehenden Platzes bestehen. Weiterhin ist der akustische Eindruck eines derartigen Brennstoffzellensystems bzw. Fahrzeugs deutlich verbessert. Durch die Verwendung von Breitbandschalldämpfern können besonders Aggregate mit breiten Frequenzspektren der Geräuschemission günstig bedämpft werden.

Weitere Vorteile und Ausgestaltungen der Erfindung gehen aus den weiteren Ansprüchen und der Beschreibung hervor.

Im folgenden ist die Erfindung anhand einer Zeichnung näher erläutert. Dabei zeigen
- Fig. 1: einen Ausschnitt aus einem erfindungsgemäßen Brennstoffzellensystem mit einer ersten günstigen Anordnung von Schalldämpfern,
- Fig. 2: einen Ausschnitt aus einem erfindungsgemäßen Brennstoffzellensystem mit einer zweiten günstigen Anordnung von Schalldämpfern und
- Fig. 3: eine vorteilhafte Anordnung von schalldämmenden Mitteln.

Die Erfindung eignet sich besonders für den Einsatz von Brennstoffzellensystemen in mobilen Anlagen, wie etwa Brennstoffzellenfahrzeugen, soll aber nicht auf diese Verwendung eingeschränkt sein.

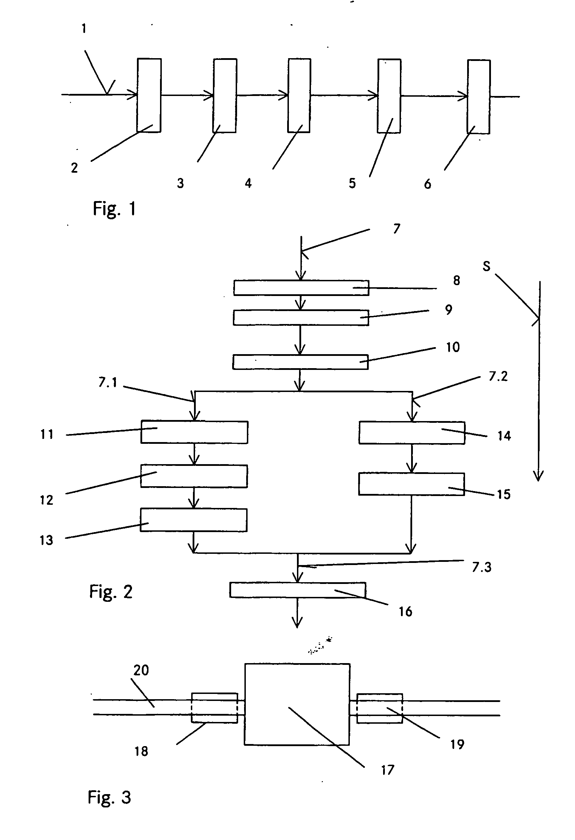

In Fig. 2 ist schematisch ein Ausschnitt einer vorteilhaften Ausgestaltung des erfindungsgemäßen Brennstoffzellensystems anhand einer Luftstrecke des Systems dargestellt. Entlang einer Luftstrecke 7 ist in Strömungsrichtung S eine Ansaugvorrichtung 8 zur Ansaugung von Luft, ein Luftfilter 9 und ein erster Schalldämpfer 10 angeordnet. Die Luftstrecke 7 verzweigt sich anschließend in eine erste Teilstrecke 7.1 und eine zweite Teilstrecke 7.2.

In der ersten Teilstrecke 7.1 ist in Strömungsrichtung S ein zweiter Schalldämpfer 11, eine Brennstoffzelleneinheit 12 und ein dritter Schalldämpfer 13 angeordnet. In der zweiten Teilstrecke 7.2 ist in Strömungsrichtung S ein vierter Schalldämpfer 14 und ein katalytischer Brenner 15 angeordnet.

Stromab des katalytischen Brenners 15 und des dritten Schalldämpfers 13 vereinigen sich die beiden Teilstrecken 7.1, 7.3 wieder zu einer gemeinsamen Luftstrecke 7.3, in der in Strömungsrichtung S ein fünfter Schalldämpfer 16 angeordnet ist.

Die Schalldämpfer 10, 11, 13, 14, 16 sind vorteilhaft an den Stellen im System angeordnet, an denen störende Geräusche entstehen, z.B. durch Pulsationen eines Fluids in fluidfuhrenden Leitungen. Damit wird eine Geräuschemission genau an den Stellen vermindert, an denen Geräusche entstehen. Die Geräuschübertragung entlang der Leitungen, hier der Luftstrecke 7, 7.1, 7.2, 7.3 wird damit deutlich vermindert. Damit kann etwa ein Endschalldämpfer am Ende der Luftstrecke 7, 7.1, 7.2, 7.3 und/oder ein Ansaugschalldämpfer an deren Anfang verkleinert werden oder sogar ganz entfallen.

Besonders beim Einsatz in einem Brennstoffzellenfahrzeug ist es vorteilhaft, wenn auf voluminöse Bauteile verzichtet werden kann.

Die Schalldämpfer 10, 11, 13, 14, 16 können so ausgebildet sein, daß sie zum Dämmen eines Frequenzbereichs zur Schalldämmung zumindest von 400 Hz bis 4000 Hz geeignet sind. Dies entspricht einer Abstimmung auf die Frequenzbereiche in denen die Kompressor-Expander-Einheit und das Gebläse des katalytischen Brenners 15 Geräusche in unerwünschter Lautstärke emittieren. Ein bevorzugter Schalldämpfer-Typ ist ein sogenannter Helmholtz-Schalldämpfer. Dieser besteht z.B. aus zwei konzentrischen Zylindern, wobei am inneren Zylinder radial Lochreihen im wesentlichen äquidistant angeordnet sind und axial eine Mehrzahl solcher Lochreihen folgen. Die axialen Abstände der Lochreihen können variieren. So kann an einem Ende des Zylinders eine hohe Dichte von Lochreihen vorhanden sein und die Dichte zum anderen Ende des Zylinders abnehmen. Ist die Dichte hoch, werden bevorzugt hohe Frequenzen bedämpft, ist die Dichte niedrig, werden bevorzugt niedrige Frequenzen bedämpft. Das Volumen zwischen den Zylindern kann in Kammern unterteilt sein, um die Dämpfung zu verbessern.

Besonders zweckmäßig ist, die Schalldampfer 10, 11, 13, 14, 16 zumindest benachbart zu Bereichen der medienführenden Leitungen anzuordnen, bei denen Pulsationen in der Luft auftreten. Der erste Schalldämpfer 10 ist am Eingang zum Kompressor und zum Gebläse des katalytischen Brenners angeordnet. Der zweite Schalldämpfer 11 ist am Ausgang des Kompressors und am Eingang zur Brennstoffzelleneinheit 12 angeordnet. Der dritte Schalldämpfer 13 ist am Eingang zum Expander der Kompressor-Expander-Einheit angeordnet. Der vierte Schalldämpfer 14 ist am Eingang zum katalytischen Brenner vorgesehen. Der fünfte Schalldämpfer 16 ist am Ausgang des Expanders und am Ausgang des Gebläses des katalytischen Brenners 15 angeordnet.

Günstig ist, die schalldämmenden Mittel 10, 11, 13, 14, 16 im wesentlichen rotationssymmetrisch um die Leitungen 7, 7.1, 7.2, 7.3 herum bzw. um die Eingänge von Kompressor und Gebläse bzw. die Ausgänge von Kompressor und Gebläse herum anzuordnen. Die schalldämmenden Mittel sind vorzugsweise aus Metall, besonders bevorzugt aus Aluminium oder einer Aluminiumlegierung, gefertigt. Dies ermöglicht eine gute Schalldämmung, ohne daß das Gewicht des Systems zu sehr erhöht wird. Besonders günstig ist, stromauf von Brennstoffzellen Schalldämpfer aus Polyamid oder Edelstahl zu verwenden, um eine Kontamination der Brennstoffzellen mit Aluminium zu vermeiden.

In Fig. 1 ist schematisch eine weitere Ausführung eines Brennstoffzellensystems mit bevorzugten Breitbandschalldämpfern dargestellt. Entlang einer Luftstrecke 1 sind in Strömungsrichtung eine Ansaugvorrichtung 2 zur Ansaugung der Luft, ein Luftfilter 3, ein erster Schalldämpfer 4, eine Kompressor-Verdichter-Einheit 5 zur Kathodenluftversorgung einer nicht dargestellten Brennstoffzelleneinheit des Brennstoffzellensystems und ein zweiter Schalldämpfer 6 angeordnet. Die Brennstoffzelleneinheit weist zumindest eine Brennstoffzelle mit Anodenraum und Kathodenraum auf, wobei Kathodenraum und Anodenraum durch eine ionenleitende Membran getrennt sind.

Luft wird durch die Ansaugvorrichtung 2 angesaugt und über den Luftfilter 3 in den Kompressor der Kompressor-Verdichter-Einheit 5 geleitet, dort verdichtet und der Kathode der Brennstoffzelleneinheit zugeführt. Durch die Kompression der Luft in der Luftstrecke 1 entstehen unter üblichen Strömungsbedingungen Pulsationen der Luft, welche erhebliche Geräuschemissionen nach sich ziehen. Der erste Schalldämpfer 4 ist stromauf des Kompressors an dessen Eingangsseite und der zweite Schalldämpfer 6 stromab des Kompressors der Kompressor-Verdichter-Einheit 5 am Ausgang des Kompressors angeordnet.

Erfindungsgemäß sind die ersten und zweiten Schalldämpfer 4, 6 als Breitbandschalldämpfer ausgebildet. Übliche Schalldämpfer, wie handelsübliche Endschalldämpfer oder Ansaugschalldämpfer, die als Absorptions-Reflektionsschalldämpfer ausgebildet sind, können nur einen kleinen Teil des entstehenden Geräuschspektrums dämpfen. Dagegen sind die Breitbandschalldämpfer so ausgebildet, daß sie im wesentlichen Frequenzen des Geräuschspektrums dämpfen können. Vorzugsweise sind die schalldämmenden Mittel so ausgebildet, daß sie einen Frequenzbereich zur Schalldämmung aufweisen, der im wesentlichen dem Frequenzbereich der Geräuschemissionen des jeweils schallzudämmenden Körpers entspricht.

In Fig. 3 ist eine vorteilhafte Anordnung von schalldämmenden Mitteln in einem Brennstoffzellensystem dargestellt. Eine Schallquelle 17 ist in einer medienführenden Leitung 20 angeordnet. Am Eingang und am Ausgang der Schallquelle 17 ist jeweils ein Schalldämpfer 18, 19 angeordnet. Besonders günstig ist, wenn die Schalldämpfer 18, 19 so in die Leitung 20 integriert sind, daß sie unmittelbar vom Medium durchströmt werden können. Die Schalldämpfer 18, 19 umschließen die Leitung bzw. den Strömungspfad 20 ähnlich einer Manschette und sind günstigerweise möglichst nahe am Eingang und/oder am Ausgang der Schallquelle 17 angebracht.

Bei der Verwendung von schalldämmenden Mitteln wie etwa Helmholtz-Schalldampfern, deren Dämpfungsvermogen entlang ihrer durchströmbaren Achse frequenzabhängig ist, wird die Einbaurichtung besonders bevorzugt so gewählt, daß derjenige Bereich des Schalldämpfers 17, 18 der Schallquelle 17 zugewandt ist, welcher hohe Frequenzen besser als niedrige Frequenzen bedämpft.

## Patentansprüche

1. Brennstoffzellensystem ausgebildet für die Verwendung in einem Brennstoffzellenfahrzeug mit zumindest einer Brennstoffzelle (12) und einem Verdichter zur Luftversorgung der zumindest einen Brennstoffzelle (12) und schalldämmenden Mitteln (10, 11, 13, 14, 16, 18, 19) zur Dämmung von Schall in der Luftstrecke (7, 7.1, 7.2, 7.3) des Brennstoffzellensystems,
**dadurch gekennzeichnet, dass**
die schalldämmenden Mittel (10, 11, 13, 14, 16) im wesentlichen an Bereichen der Luftstrecke (7, 7.1, 7.2, 7.3) angeordnet sind, an oder in denen eine Geräuschemission erzeugt wird, wobei das Brennstoffzellensystem mindestens eine Schallquelle aufweist und wobei die schalldämmenden Mittel an dem Eingang und an dem Ausgang der Schallquelle angeordnet sind,
wobei die schalldämmenden Mittel (10, 11, 13, 14, 16, 18, 19) am Eingang und am Ausgang des Verdichters als Schallquelle angeordnet sind
und/oder
wobei die schalldämmenden Mittel (10, 11, 13, 14, 16, 18, 19) am Eingang und am Ausgang eines Gebläses zur Luftversorgung eine katalytischen Brenners (15) als Schallquelle angeordnet sind.

2. Brennstoffzellensystem nach Anspruch 1,
**dadurch gekennzeichnet,**
**daß** die schalldämmenden Mittel (10, 11, 13, 14, 16, 18, 19) zumindest benachbart zu Bereichen von medienführenden Leitungen (7, 7.1, 7.2, 7.3) angeordnet sind, bei denen Pulsationen in den geführten Medien auftreten.

3. Brennstoffzellensystem nach Anspruch 1,
**dadurch gekennzeichnet,**
**daß** die schalldämmenden Mittel (10, 11, 13, 14, 16, 18, 19) die medienführenden Leitungen (7, 7.1, 7.2, 7.3) umschließen oder in die Leitung integriert sind, so daß sie direkt vom Medium durchströmt sind.

4. Brennstoffzellensystem nach Anspruch 1,
**dadurch gekennzeichnet,**
**daß** die schalldämmende Mittel (10, 11, 13, 14, 16, 18, 19) als Breitbandschalldämpfer ausgebildet sind.

5. Brennstoffzellensystem nach Anspruch 1,
**dadurch gekennzeichnet,**
**daß** die schalldämmenden Mittel (10, 11, 13, 14, 16, 18, 19) einen Frequenzbereich zur Schalldämmung aufweisen, der im wesentlichen dem Frequenzbereich der Geräuschemissionen entspricht.

6. Brennstoffzellensystem nach Anspruch 2,
**dadurch gekennzeichnet,**
**daß** der Frequenzbereich zur Schalldämmung zumindest von 400 Hz bis 4000 Hz reicht.

7. Brennstoffzellensystem nach Anspruch 1,
**dadurch gekennzeichnet,**
**daß** die schalldämmenden Mittel (10, 11, 13, 14, 16, 18, 19) so an einer Schallquelle angeordnet sind, daß nahe der Schallquelle hohe Frequenzen und entfernt von der Schallquelle niedrige Frequenzen bedämpfbar sind.
**daß**.

8. Brennstoffzellensystem nach Anspruch 1,
**dadurch gekennzeichnet,**
**daß** ausgehend von einer Luftzuführung (8, 9) in einer Luftstrecke (7) mit einer Strömungsrichtung (S) stromab ein erster Breitbandschalldämpfer (10) angeordnet ist, daß die Luftstrecke (7) stromab des ersten Breitbandschalldämpfers (10) in eine erste Teilstrecke (7.1) und eine zweite Teilstrecke (7.2) aufgeteilt ist, daß in der ersten Teilstrecke (7.1) stromab ein Kompressor angeordnet ist, daß stromab des Kompressors und stromauf einer Kathodenluftzuführung (11.1) der zumindest einen Brennstoffzelle (12) ein zweiter Breitbandschalldämpfer (11) angeordnet ist, daß stromab der zumindest einen Brennstoffzelle (12) und stromauf eines Expanders ein dritter Breitbandschalldämpfer (13) angeordnet ist,
**daß** in der zweiten Teilstrecke (7.2) stromab ein vierter Breitbandschalldämpfer (14) stromauf eines Gebläses zur Luftversorgung eines katalytischen Brenners (15) angeordnet ist, daß stromab des Gebläses der katalytischer Brenner (15) angeordnet ist, daß stromab des katalytischen Brenners (15) und stromab des Expanders die erste und die zweite Teilstrecke (7.1, 7.2) wieder in einer gemeinsamen Luftstrecke (7.3) zusammengeführt sind und daß in der gemeinsamen Luftstrecke (7.3) ein fünfter Breitbandschalldämpfer (16) zum Dämmen einer Ausgangsseite (16.1) von Expander und Gebläse angeordnet ist.

9. Brennstoffzellensystem nach Anspruch 1,
**dadurch gekennzeichnet,**
**daß** die schalldämmenden Mittel (10, 11, 13, 14, 16, 18, 19) aus Aluminium oder einer Aluminium-Legierung oder einem Edelstahl oder einem Kunststoff gebildet sind.

10. Verwendung des Brennstoffzellensystems nach Anspruch 1 in einem Brennstoffzellenfahrzeug.

## Claims

1. Fuel cell system designed for use in a fuel cell vehicle, with at least one fuel cell (12) and with a compressor for the air supply of the at least one fuel cell (12) and with sound absorbing means (10, 11, 13, 14, 16, 18, 19) for absorbing sound in the air flow path (7, 7.1, 7.2, 7.3) of the fuel cell system,
**characterised in that**
the sound absorbing means (10, 11, 13, 14, 16) are essentially provided in regions of the air flow path (7, 7.1, 7.2, 7.3) where a noise emission is generated, the fuel cell system comprising at least one sound source and the sound absorbing means being located at the entry and the exit of the sound source,
wherein the sound absorbing means (10, 11, 13, 14, 16, 18, 19) are located at the inlet and the outlet of the compressor forming the sound source,
and/or
wherein the sound absorbing means (10, 11, 13, 14, 16, 18, 19) are located at the inlet and the outlet of a fan for the air supply of a catalytic burner (15) forming the sound source.

2. Fuel cell system according to claim 1,
**characterised in that**
the sound absorbing means (10, 11, 13, 14, 16, 18, 19) are located at least adjacent to regions of media-carrying lines (7, 7.1, 7.2, 7.3) where pulsation occurs in the carried media.

3. Fuel cell system according to claim 1,
**characterised in that**
the sound absorbing means (10, 11, 13, 14, 16, 18, 19) enclose or are integrated into the media-carrying lines (7, 7.1, 7.2, 7.3), so that the medium flows directly through them.

4. Fuel cell system according to claim 1,
**characterised in that**
the sound absorbing means (10, 11, 13, 14, 16, 18, 19) are designed as broadband silencers.

5. Fuel cell system according to claim 1,
**characterised in that**
the sound absorbing means (10, 11, 13, 14, 16, 18, 19) have a sound absorbing frequency range which substantially corresponds to the frequency range of the noise emissions.

6. Fuel cell system according to claim 2,
**characterised in that**
the sound absorbing frequency range extends at least from 400 Hz to 4000 Hz.

7. Fuel cell system according to claim 1,
**characterised in that**
the sound absorbing means (10, 11, 13, 14, 16, 18, 19) are so arranged on a sound source that high frequencies can be attenuated near the sound source and low frequencies can be attenuated at a distance from the sound source.

8. Fuel cell system according to claim 1,
**characterised in that,**
starting from an air supply (8, 9) in an air flow path (7) with a direction of flow (S), a first broadband silencer (10) is located downstream, **in that** the air flow path (7) is divided into a first leg (7.1) and a second leg (7.2) downstream of the first broadband silencer (10), **in that** a compressor is located downstream in the first leg (7.1), **in that** a second broadband silencer (11) is located downstream of the compressor and upstream of a cathode air supply (11.1) of the at least one fuel cell (12), **in that** a third broadband silencer (13) is located downstream of the at least one fuel cell (12) and upstream of an expander, **in that** a fourth broadband silencer (14) is located in the second leg (7.2) upstream of a fan for the air supply of the catalytic burner (15), **in that** the catalytic burner (15) is located downstream of the fan, **in that** the first and second legs (7.1, 7.2) merge into a common air flow path (7.3) downstream of the catalytic burner (15) and downstream of the expander, and **in that** a fifth broadband silencer (16) is located in the common air flow path (7.3) for sound absorption on an outlet side (16.1) of the expander and the fan.

9. Fuel cell system according to claim 1,
**characterised in that**
the sound absorbing means (10, 11, 13, 14, 16, 18, 19) are made of aluminium or an aluminium alloy or a stainless steel or a plastic material.

10. Use of the fuel cell system according to claim 1 in a fuel cell vehicle.

## Revendications

1. Système de pile à combustible configuré pour l'utilisation dans un véhicule à pile à combustible avec au moins une pile à combustible (12) et un compresseur pour l'alimentation en air de l'au moins une pile à combustible (12) et des éléments insonorisant (10, 11, 13, 14, 16, 18, 19) pour atténuer le bruit dans l'espace d'air (7, 7.1, 7.2, 7.3) du système de pile à combustible, **caractérisé en ce que** les éléments insonorisant (10, 11, 13, 14, 16) sont disposés essentiellement dans les zones de l'intervalle d'air (7, 7.1, 7.2, 7.3) sur lesquelles ou dans lesquelles une émission de bruit est générée, le système de pile à combustible présentant au moins une source de bruit et les éléments insonorisant étant disposés à l'entrée et à la sortie de la source de bruit, les éléments insonorisant (10, 11, 13, 14, 16, 18, 19) étant disposés à l'entrée et à la sortie du compresseur en tant que source de bruit et / ou les éléments insonorisant (10, 11, 13, 14, 16, 18, 19) étant disposés à l'entrée et à la sortie d'un ventilateur pour l'alimentation en air d'un brûleur (15) catalytique en tant que source de bruit.

2. Système de pile à combustible selon la revendication 1, **caractérisé en ce que** les éléments insonorisant (10, 11, 13, 14, 16, 18, 19) sont disposés au moins à proximité de zones de conduits transportant des fluides (7, 7.1, 7.2, 7.3) pour lesquels des pulsations se produisent dans les fluides transportés.

3. Système de pile à combustible selon la revendication 1, **caractérisé en ce que** les éléments insonorisant (10, 11, 13, 14, 16, 18, 19) entourent les conduits transportant des fluides (7, 7.1, 7.2, 7.3) ou sont intégrés dans le conduit de manière telle qu'ils sont directement traversés par le fluide.

4. Système de pile à combustible selon la revendication 1, **caractérisé en ce que** les éléments insonorisant (10, 11, 13, 14, 16, 18, 19) sont conçus en tant que silencieux à large bande.

5. Système de pile à combustible selon la revendication 1, **caractérisé en ce que** les éléments insonorisant (10, 11, 13, 14, 16, 18, 19) présentent une gamme de fréquence pour l'isolation phonique qui correspond essentiellement à la gamme de fréquence des émissions de bruit.

6. Système de pile à combustible selon la revendication 2, **caractérisé en ce que** la gamme de fréquence pour l'isolation phonique s'élève au moins entre 400 Hz et 4000 Hz.

7. Système de pile à combustible selon la revendication 1, **caractérisé en ce que** les éléments insonorisant (10, 11, 13, 14, 16, 18, 19) sont disposés sur une source de bruit de manière telle que de hautes fréquences à proximité de la source de bruit et de basses fréquences éloignées de la source de bruit puissent être amorties.

8. Système de pile à combustible selon la revendication 1, **caractérisé en ce qu'**à partir d'une amenée d'air (8, 9) dans un espace d'air (7) avec un sens écoulement (S), un premier silencieux à large bande (10) est disposé en aval, **en ce que** l'espace d'air (7) en aval du premier silencieux à large bande (10) est divisé en un premier espace partiel (7.1) et un second espace partiel (7.2), **en ce que** dans le premier espace partiel (7.1) un compresseur est disposé en aval, **en ce qu'**en aval du compresseur et en amont d'un dispositif d'alimentation en air de cathode (11.1) de l'au moins une pile à combustible (12) est disposé un second silencieux à large bande (11), **en ce qu'**en aval de l'au moins une pile à combustible (12) et en amont d'un condenseur est disposé un troisième silencieux à large bande (13), **en ce que** dans le second espace partiel (7.2) en aval un quatrième silencieux à large bande (14) est disposé en amont d'un ventilateur pour l'alimentation en air d'un brûleur catalytique (15), **en ce que** le brûleur catalytique (15) est disposé en aval du ventilateur, **en ce qu'**en aval du brûleur catalytique (15) et en aval du condenseur le premier et le second espaces partiels (7.1, 7.2) sont de nouveau réunis en un espace d'air commun (7.3) et **en ce que** dans l'espace d'air commun (7.3) un cinquième silencieux à large bande (16) est disposé pour isoler un côté de sortie (16.1) du condenseur et le ventilateur.

9. Système de pile à combustible selon la revendication 1, **caractérisé en ce que** les éléments insonorisant (10, 11, 13, 14, 16, 18, 19) sont fabriqués en aluminium ou en alliage d'aluminium ou encore en acier inoxydable ou en matière plastique.

10. Utilisation d'un système de pile à combustible selon la revendication 1 dans un véhicule à pile à combustible.
